# EUROPEAN PATENT APPLICATION

(11) **EP 2 863 623 A1**
(43) Date of publication of application: **22.04.2015**
(21) Application number: 14188774.5
(22) Date of filing: 14.10.2014
(51) Int. Cl.: H04N 5/225

(54) **Vehicle camera with an improved connecting device and motor vehicle**

(30) Priority: 15.10.2013 DE 102013017095
(71) Applicant: Connaught Electronics Ltd., Tuam, County Galway (IE)
(72) Inventor: The designation of the inventor has not yet been filed
(74) Representative: Jauregui Urbahn, Kristian

(57) **Abstract**

The invention relates to a vehicle camera (1) for a motor vehicle, including a camera housing (2), in which an image sensor of the vehicle camera (1) is disposed, and including an electrical connecting device (10) for connecting the vehicle camera (1) to the motor vehicle, wherein the connecting device (10) is formed as a coaxial connecting device, which includes a coaxial line (11) integrated in a housing wall (4) of the camera housing (2) and extending through the housing wall (4), with a first coaxial connecting element (21), which is formed for connecting to a corresponding second coaxial connecting element (22) of the connecting device (10) disposed in the camera housing (2).

## Description

The invention relates to a vehicle camera for a motor vehicle including a camera housing, in which an image sensor and further electronic components of the vehicle camera are disposed, and including an electrical connecting device for connecting the vehicle camera to the motor vehicle. In addition, the invention relates to a motor vehicle with such a vehicle camera.

Camera systems for motor vehicles are already known from the prior art. As is known, several cameras can be employed in a motor vehicle, wherein it becomes increasingly common nowadays to use a camera assembly with at least two cameras for a camera system of a vehicle, which each capture an environmental region of the motor vehicle. For example, four cameras can be employed, which capture the entire environment around the motor vehicle. For example, an overall image presentation can be provided from the images of all of the cameras, such as for example the so-called "bird eye view". This image presentation represents a plan view of the motor vehicle as well as its environment from a bird's eye view and thus for example from a reference point of view directly above the motor vehicle. The provision of such an environmental representation from the images of several cameras is for example known from the document US 2011/0156887.

Usually, vehicle cameras have an electrical connecting device, via which the vehicle camera can be electrically connected to the controller of the motor vehicle. For example, digital image data can be communicated from the camera to the controller or to the image processing device via this connecting device of the vehicle camera. On the other hand, the connecting device can also serve for supplying the camera with electrical energy. Usually, a vehicle camera is coupled to the controller of the motor vehicle via a wiring harness. This wiring harness includes a plurality of electrical wires or lines. Upon assembly of the vehicle camera, the electrical lines are inserted through a lid or cover of the camera housing and then connected to connecting elements on a circuit board. Then, the assembly opening of the camera housing is closed by the lid. Due to the plurality of wires, which have to be separately connected to the circuit board, the assembly of the vehicle camera is therefore relatively expensive. Therein, these wires are only suitable for transmitting NTSC (national television system committee) signals.

It is an object of the invention to provide a vehicle camera with an electrical connecting device improved with respect to the prior art as well as a motor vehicle with such a camera.

A vehicle camera according to the invention for a motor vehicle includes a camera housing, in which an image sensor of the vehicle camera is disposed, as well as an electrical connecting device formed for connecting the vehicle camera to the motor vehicle. Preferably, digital signals and data, respectively, can be transmitted between the vehicle camera on the one hand and a controller of the motor vehicle on the other hand via the connecting device. According to the invention, it is provided that the connecting device is formed as a coaxial connecting device. This coaxial connecting device includes a coaxial line integrated in a housing wall of the camera housing and extending through this housing wall. A first coaxial connecting element is connected to the coaxial line, which is formed for connecting to a second coaxial connecting element of the connecting device disposed in the camera housing.

Thus, the effect according to the invention is achieved by a coaxial line, which is formed integrally with the housing wall of the camera housing and carries a first coaxial connecting element, which can be electrically and mechanically connected to a second connecting element, which is disposed in the camera housing. The vehicle camera according to the invention has the advantage that the assembly effort is considerably reduced compared to the prior art and the vehicle camera thus overall can be assembled without much effort. Namely, the two coaxial connecting elements can be very easily connected to each other for example by plugging a coaxial plug into a coaxial socket. In that the coaxial line is formed integrally with the housing wall, the handling is further facilitated and the required stability is ensured.

Preferably, the vehicle camera is a color-sensitive image capturing device, which is able to detect light in the visible spectral range and thus to capture images. For example, the image sensor can be a CCD image sensor or else a CMOS image sensor. The vehicle camera can be a video camera providing a sequence of images per second.

Preferably, the coaxial line is molded in the housing wall. This means that the coaxial line is overmolded by the plastic material of the housing wall. Thus, the coaxial line is formed integrally with the housing wall. Thereby, the advantage of a stable coaxial connecting device results, which is also able to withstand greater tensile forces on the coaxial line. Particularly preferably, the housing wall is formed as a lid, by means of which an assembly opening of the camera housing can be closed. With removed lid, the assembly opening is thus opened and the housing is thus accessible for assembly of the electronic components of the camera. The attachment of the coaxial line with the first coaxial connecting element to the lid additionally has the advantage that the two connecting elements can be disposed and oriented relatively to each other such that upon closing the assembly opening with the lid, the mechanical and electrical connection between the connecting elements is automatically established.

Thus, in an embodiment, it can be provided that the second connecting element is fixedly disposed in the camera housing and is oriented towards the lid such that upon closing the assembly opening with the lid, the first and the second connecting element connect to each other. This connection is thus established by closing the lid. Therein, the second connecting element can for example be disposed oriented perpendicularly to the plane of the assembly opening. The second connecting element can also be in the plane of the assembly opening such that it extends through the assembly opening. Therein, the lid can be formed hood-shaped and have an indentation or receptacle, in which the first connecting element is disposed. Upon connecting the lid to the remaining portion of the camera housing, thus, the first connecting element connects to the second connecting element. Thereby, the assembly effort is considerably reduced in manufacture of the vehicle camera since wires do not have to be tediously connected to the circuit board.

The lid can be connected to the remaining portion of the camera housing for example by means of screws. Preferably, the lid is a component separate from the remaining portion of the camera housing.

It proves particularly advantageous if the first connecting element is disposed at an end of a flexible section of the coaxial line. This flexible and thus bendable section of the coaxial line is preferably disposed on a side of the housing wall facing the camera housing or the interior of the camera housing. By the flexible configuration of the section of the coaxial line as well as by the arrangement of the first connecting element on this flexible section, the first connecting element can autonomously align with the second connecting element upon closing the lid, and thus manufacturing tolerances can be compensated for. Therein, the flexibility of the coaxial line preferably exists only in the direction perpendicular to the coaxial line, but not in longitudinal direction of the coaxial line.

Furthermore, it is preferred if one of the connecting elements - for example the first connecting element - is formed as a coaxial socket and the other connecting element-for example the second connecting element - are formed as coaxial plug. Preferably, the coaxial socket has an introduction chamfer or inclination for the coaxial plug. Upon closing the lid, thus, the coaxial plug can be particularly easily inserted or plugged into the coaxial socket without much effort, which further favors the autonomous connection of the two connecting elements.

In an embodiment, the second connecting element is disposed on a circuit board in the camera housing. Thereby, this second connecting element can be directly coupled to electronic components disposed on the circuit board. In addition, particularly stable arrangement of the second connecting element is thus ensured.

Preferably, the second connecting element is formed as an SMD (surface-mounted device) component, which has a solderable surface, via which the second connecting element is soldered to a metal surface on the circuit board in SMT technology (surface-mounting technology). This further facilitates the assembly and thus the manufacture of the vehicle camera and provides for a reliable and slip-proof attachment of the second connecting element on the circuit board. In addition, thus, it is always ensured that the second connecting element is oriented perpendicularly to the circuit board and thus perpendicularly to the assembly opening and thereby also towards the first connecting element.

The mentioned housing wall, which carries the coaxial line, is preferably disposed on a rear side of the camera housing. This rear side is opposite to a lens of the vehicle camera, which in turn is attached to a front side of the camera housing.

In addition, the invention relates to a motor vehicle, in particular a passenger car, with a vehicle camera according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1: in schematic and perspective illustration a vehicle camera according to an embodiment of the invention;
- Fig. 2: in schematic illustration a sectional view through the vehicle camera according to Fig. 1 along a plane II indicated in Fig. 1;
- Fig. 3: in schematic exploded illustration the vehicle camera according to Fig. 1;
- Fig. 4: in schematic illustration the vehicle camera from another angle of view;
- Fig. 5: the sectional view through the camera according to Fig. 2 with removed lid; and
- Fig. 6: a perspective illustration through the vehicle camera according to Fig. 5.

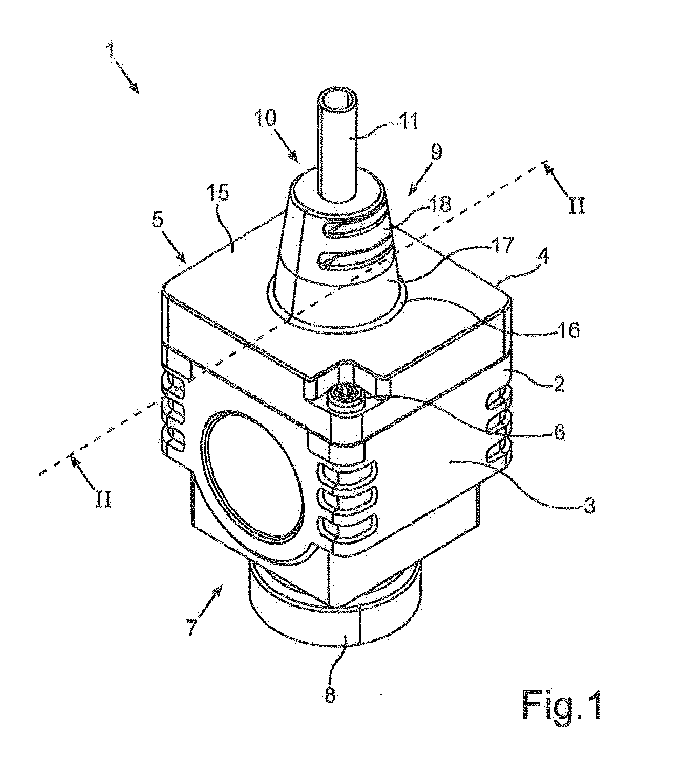

A vehicle camera illustrated in Fig. 1 and overall denoted by 1 is conceived for installation in a motor vehicle, in particular a passenger car. The vehicle camera 1 can for example be employed on a bumper, a tailgate or else in an exterior mirror.

The vehicle camera 1 includes a camera housing 2, which may be formed of plastic. In the embodiment, 3 the camera housing 2 is composed of two housing parts, namely an integral base body 3 as well as a housing wall 4, which is formed in the form of a lid 5. The electronic components of the camera 1 are disposed in an interior of the base body 3. The base body 3 of the camera housing 2 is integrally formed. The base body 3 can be a molding.

The lid 5 too can be a molding, which is produced by injection molding. The lid 5 can be connected to the base body 3 via screws 6.

On a front side 7 of the camera housing 2, a lens 8 is disposed, through which the vehicle camera 1 can capture images of a vehicle environment. The lens 8 is attached to the base body 3 of the camera housing 2. On a rear side 9 of the camera housing 2 opposing the lens 8, an electrical connecting device 10 in turn is disposed, via which the vehicle camera 1 can be electrically connected to a controller of the motor vehicle. Digital signals and image data, respectively, are transmitted via the connecting device 10. It is also possible to transmit control signals to the vehicle camera 1 and/or to supply the vehicle camera 1 with electrical energy via the connecting device 10.

The images are provided by means of an image sensor disposed in the camera housing 2 and not identified in more detail in the drawings.

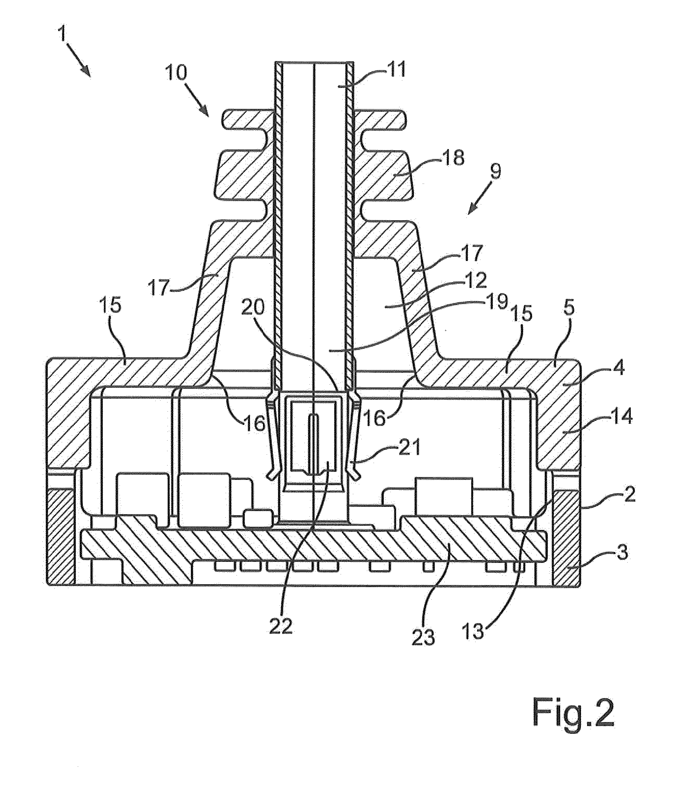

A sectional view through the connecting device 10 is illustrated in more detail in Fig. 2. In the embodiment, the connecting device 10 is formed as a coaxial connecting device and includes a coaxial line 11 (coaxial cable). This coaxial line 11 is formed integrally with the lid 5 and therein molded in the lid 5. This means that the coaxial line 11 and more precisely a region of the coaxial line 11 is overmolded by the plastic material of the lid 5.

Therein, the lid 5 is overall formed hood-shaped and has an indentation or a receptacle 12. An assembly opening 13 of the base body 3 of the camera housing 2 is closed by the lid 5. The lid 5 has a circumferential frame-shaped flange 14, which can be abutted on the base body 3 in order to close the assembly opening 13. The flange 14 protrudes perpendicularly from a wall 15, in which a circular recess 16 is formed. An edge of this recess 16 is connected to a further wall 17, which is disposed at an angle to the wall 15 and connected to a connecting area 18 connected to the coaxial line 11. The receptacle 12 of the lid 5 is overall bounded by the flange 14, the wall 15 as well as by the wall 17.

A section 19 of the coaxial line 11 is disposed in the receptacle 12 of the lid 5 and extends perpendicularly to the wall 15 and parallel to the flange 14. The section 19 extends perpendicularly to the assembly opening 13. At an end 20 of the section 19, a first coaxial connecting element 21 is attached, which is formed in the form of a coaxial socket in the embodiment, in which a second coaxial connecting element 22 in the form of a coaxial plug is plugged. The second connecting element 22 is disposed on a circuit board 23, which is attached in the base body 3 of the camera housing 2. The circuit board 23 is disposed in the region of the assembly opening 13 such that the second connecting element 22 extends through the assembly opening 13 and points towards the outside of the base body 3. Therein, the second connecting element 22 extends perpendicularly to the plane of the assembly opening 13 and is located approximately centrally on the circuit board 23.

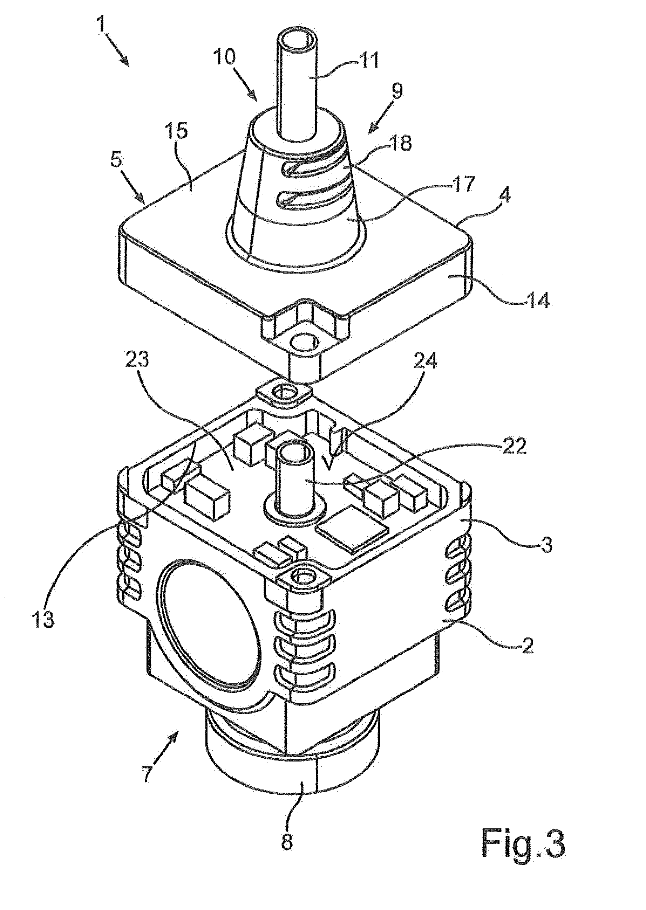

As is apparent from Fig. 3, the second connecting element 22 is configured as an SMD component, which is soldered on a surface 24 of the circuit board 23. The second connecting element 22 is thus fixedly disposed in the base body 3 of the camera housing 2 and slightly protrudes from the base body 3 towards the lid 5.

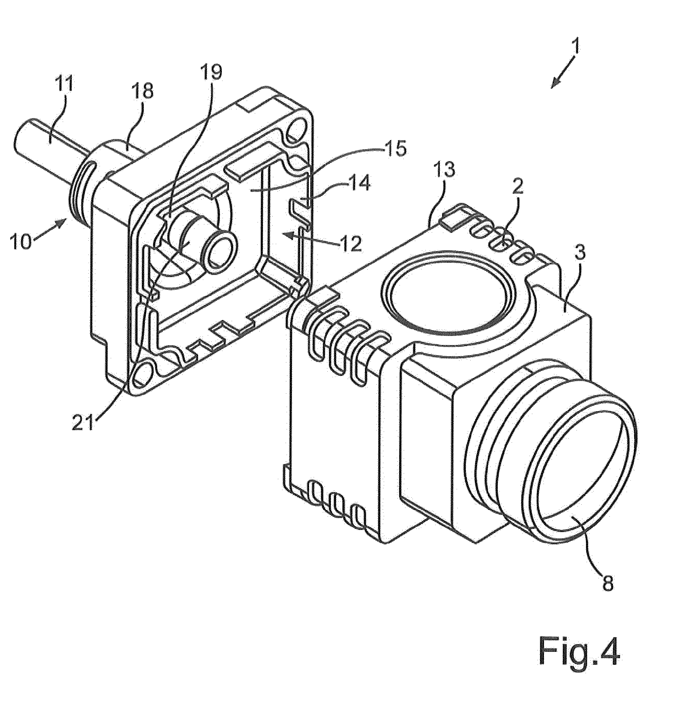

The bottom of the lid 5 is shown in perspective illustration in Fig. 4. Here, the configuration of the first connecting element 21 as a coaxial socket is recognizable, into which the coaxial plug (the second connecting element 22) can be plugged.

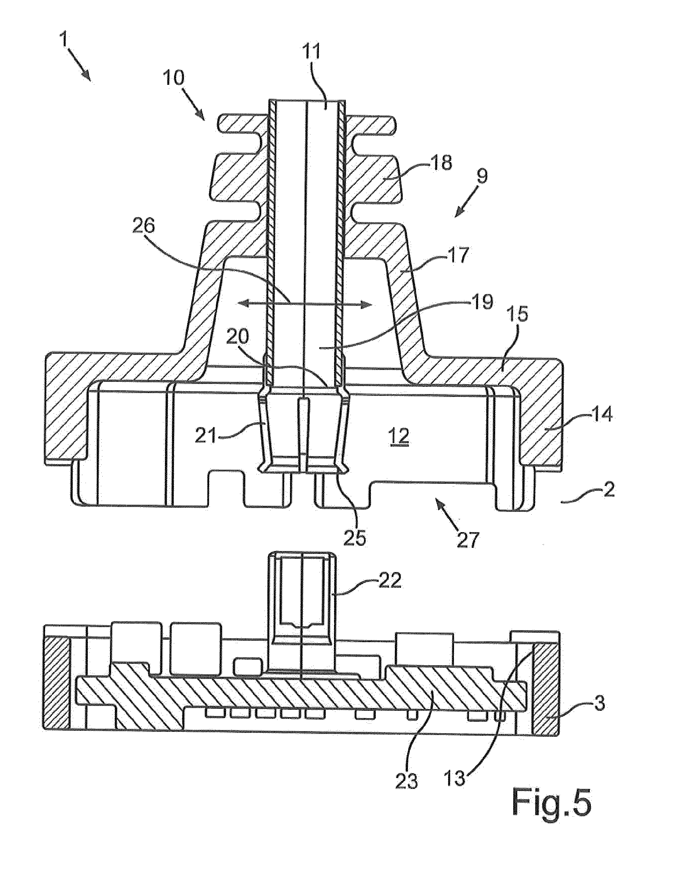

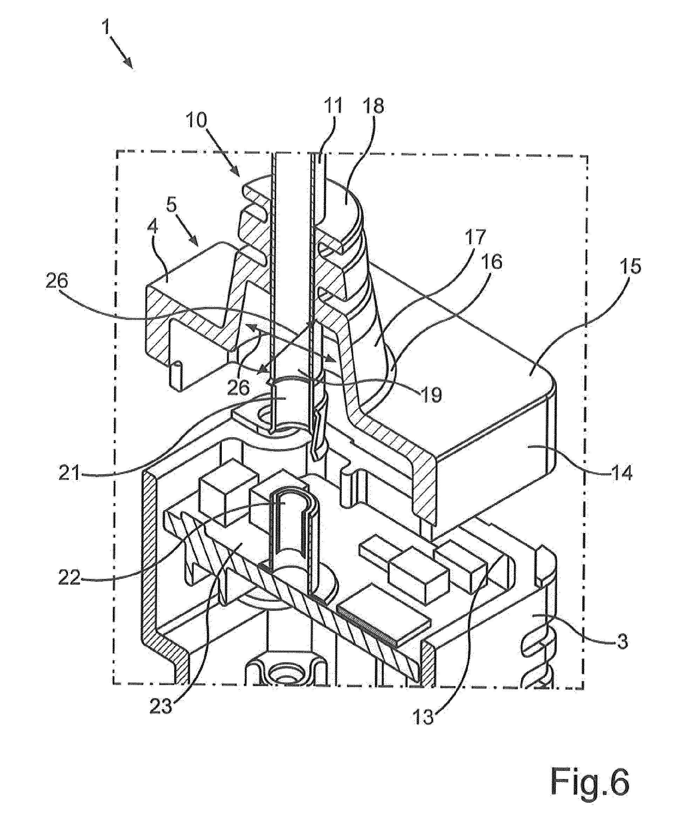

As is further apparent from Fig. 5 and 6, the first connecting element 21 is disposed approximately on the level of the flange 14. Like the second connecting element 22, the first connecting element 21 too is disposed centrally in the receptacle 12. Both connecting elements 21, 22 are thus disposed opposing each other and thus disposed in the direction perpendicular to the coaxial line 11 in the same position. As is apparent from Fig. 5, the first connecting element 21 has an introduction chamfer 25, which facilitates the introduction of the coaxial plug into the coaxial socket. To this, this introduction chamfer 25 is formed resilient, which further facilitates the connection.

According to the arrow representation 26, the section 19 of the coaxial line 11 disposed on a side 27 of the lid 5 facing the base body 3 is formed flexibly movable in direction perpendicular to the coaxial line 11. The section 19 can be easily bent according to the arrow representation 26 and thus perpendicularly to the coaxial line 11. Thereby, it is achieved that the first connecting element 21 is able to align with the second connecting element 22 with cooperation of the introduction chamfer 25 with the coaxial plug upon assembly of the vehicle camera 1.

Starting from the illustration according to Fig. 5 and 6, upon assembly of the vehicle camera 1, the lid 5 is abutted on the base body 3 and attached via the screws 6. Upon closing the assembly opening 13 and upon moving the lid 5 towards the base body 3, respectively, the connecting elements 21, 22 are aligned with each other and autonomously connect to each other as soon as the lid 5 reaches the base body 3. Therein, the flexible configuration of the section 19 as well as the introduction chamfer 25 facilitate the connecting operation. Thereby, possible tolerances are also compensated for.

## Claims

1. Vehicle camera (1) for a motor vehicle comprising a camera housing (2), in which an image sensor of the vehicle camera (1) is disposed, and comprising an electrical connecting device (10) for connecting the vehicle camera (1) to the motor vehicle,
**characterized in that**
the connecting device (10) is formed as a coaxial connecting device, which includes a coaxial line (11) integrated in a housing wall (4) of the camera housing (2) and extending through the housing wall (4), with a first coaxial connecting element (21), which is formed for connecting to a corresponding second coaxial connecting element (22) of the connecting device (10) disposed in the camera housing (2).

2. Vehicle camera (1) according to claim 1,
**characterized in that**
the coaxial line (11) is molded in the housing wall (4).

3. Vehicle camera (1) according to claim 1 or 2,
**characterized in that**
the housing wall (4) is a lid (5) for closing an assembly opening (13) of the camera housing (2).

4. Vehicle camera (1) according to claim 3,
**characterized in that**
the second connecting element (22) is fixedly disposed in the camera housing (2) and oriented towards the lid (5) such that upon closing the assembly opening (13) with the lid (5), the first and the second connecting element (21, 22) connect to each other.

5. Vehicle camera (1) according to any one of the preceding claims,
**characterized in that**
the first connecting element (21) is disposed at an end (20) of a flexible section (19) of the coaxial line (11), which is disposed on a side (27) of the housing wall (4) facing the camera housing (2).

6. Vehicle camera (1) according to any one of the preceding claims,
**characterized in that**
one of the connecting elements (21, 22) is formed as a coaxial socket and the other connecting element (21, 22) is formed as a coaxial plug, wherein the coaxial socket has an introduction chamfer (25) for the coaxial plug.

7. Vehicle camera (1) according to any one of the preceding claims,
**characterized in that**
the second connecting element (22) is disposed on a circuit board (23) in the camera housing (2).

8. Vehicle camera (1) according to claim 7,
**characterized in that**
the second connecting element (22) is formed as an SMD component with a solderable surface, via which the second connecting element (22) is soldered to a metal surface on the circuit board (23) in SMT technology.

9. Vehicle camera (1) according to any one of the preceding claims,
**characterized in that**
the housing wall (4) is disposed on a rear side (9) of the camera housing (2), which is opposite to a lens (8) of the vehicle camera (1).

10. Motor vehicle with a vehicle camera (1) according to any one of the preceding claims.
